# EUROPEAN PATENT APPLICATION

(11) **EP 1 755 119 A1**
(43) Date of publication of application: **21.02.2007**
(21) Application number: 05745785.5
(22) Date of filing: 31.05.2005
(51) Int. Cl.: G11B 17/028

(54) **OPTICAL DISC DRIVE**

(30) Priority: 03.06.2004 JP 2004165489
(71) Applicant: MATSUSHITA ELECTRIC INDUSTRIAL CO., LTD., Kadoma-shi, Osaka 571-8501 (JP)
(72) Inventor: NAKADE, Isamu, Matsushita Elec. Ind. Co.,Ltd., 1-ch.,Chuo-ku, Osaka-shi, Osaka 540-6319 (JP); NAKAYAMA, Tsukasa, Matsushita Elec. Ind. Co.,Ltd., 1-ch.,Chuo-ku, Osaka-shi, Osaka 540-6319 (JP)
(74) Representative: Pautex Schneider, Nicole Véronique
(86) International application number: PCT/JP2005/009948
(87) International publication number: WO 2005/119674

(57) **Abstract**

There is provided an optical disk device that is capable of obtaining a required optical disk holding force uniformly and sufficiently. When information held and recorded on an optical disk 12 is reproduced, a recording face 12a of the optical disk 12 is loaded on a loading portion 32 of a clamping mechanism 30, then a projection portion 33 is passed through a hollow portion 12c of the optical disk 12 to the label face 12b side, and then the optical disk 12 is held by chuck claws 35 protruded from the projection portion 33. At this time, the chuck claws 35 are turned around a supporting shaft 34 provided along a tangential direction of the projection portion 33 respectively to clamp the optical disk 12, but base end portions 35a of the chuck claws 35 are pushed by pushing portions 36a provided to pushing members 36 to have an elasticity and are turned. Therefore, even when a particular chuck claw 35 gets caught, the pushing portions 36a that are pushing the caught chuck claws 35 are elastically deformed to allow the pushing members 36 to move, so that remaining pushing portions 36 push the base end portions 35a of remaining chuck claws 35. As a result, remaining chuck claws 35 can clamp the optical disk 12 without fail.

## Description

### Technical Field

The present invention relates to an optical disk device for CD (Compact Disc), DVD (Digital Versatile Disc), or the like and more particularly an optical disk device for holding a center hole of an optical disk on a turntable.

### Background Art

In the prior art, as the optical disk device that executes at least one of recording of information onto the optical disk and reproduction of information from the optical disk, the optical disk device in which puts/removes the optical disk on/from the turntable manually or by a putting/removing mechanism is known (see Patent Literature 1, for example).

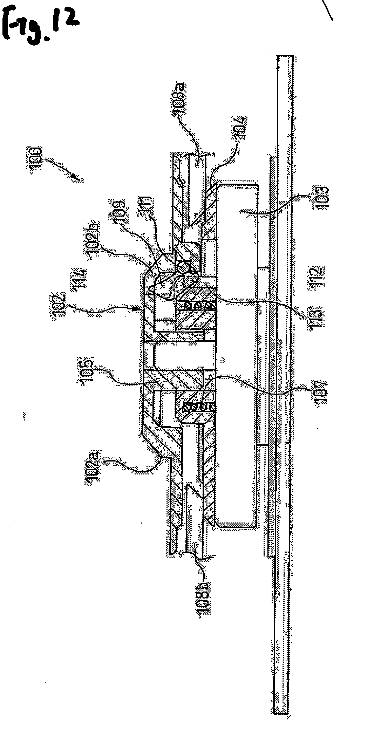

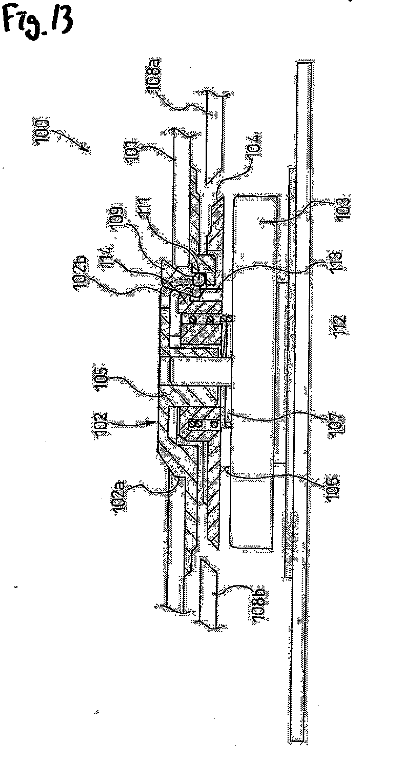

As shown in FIG.12 and FIG.13, in an optical disk device 100, a turntable 102 for holding an optical disk 101 (see FIG.13) and rotating it has generally a circular disk shape that has a circular stepped portion 102a, into which a center hole of the optical disk 101 is fitted, at the center. This turntable 102 is constructed to rotate together with a rotation pivot 103a of a rotating/driving unit 103. An elevating member 104 is fitted on a cylinder portion 105 in the center portion of the turntable 102 and is provided to slide vertically. Also, a spring 107 is provided between the elevating member 104 and a rotating upper surface 106 of the rotating/driving unit 103 to push always the elevating member 104 upward. Acting members 108a, 108b are provided on the outside of the elevating member 104 such that they can come close to and go away from the rotation center axis 103a. As shown in FIG.12, when the acting members 108a, 108b are inserted between the elevating member 104 and the turntable 102, the elevating member 104 is moved downward against a pushing force of the spring 107.

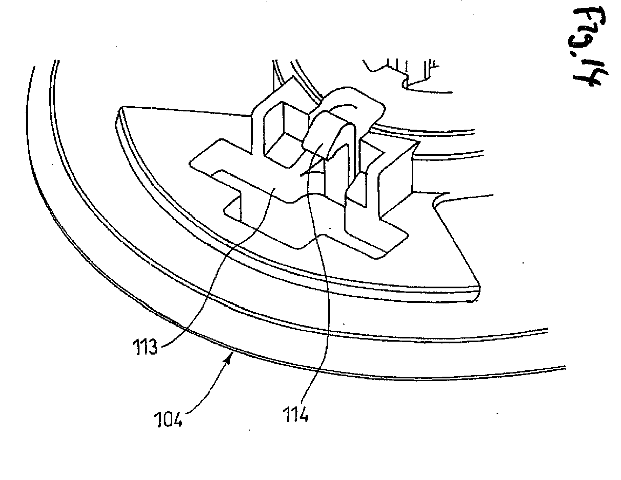

Also, a plurality of chuck claw fitting holes 102b are provided to the stepped portion 102a of the turntable 102 in the circumferential direction. Chuck claws 109 for clamping the center hole of the optical disk 101 are provided to the chuck claw fitting holes 102b. A rotating shaft portion 111 is provided to the base end side of the chuck claw 109, and the chuck claws 109 are rotated vertically (arrow X1, X2 directions in FIG.12 and FIG.13) when they are supported by the turntable 102. Pushing/engaging portions 112 of the chuck claws 109 are brought into contact with pushing portions 113 that are formed uniformly in the elevating member 104, respectively (see FIG.14). Therefore, as shown in FIG.13, when the elevating member 104 is released from the pushing pressure applied by the acting members 108a, 108b and then is moved upward by the spring 107, the pushing/engaging portions 112 of the chuck claws 109 are pushed up by the pushing portions 113 of the elevating member 104 and then are turned around the rotating shaft portions 111 as a fulcrum in the arrow X1 in FIG.12 respectively. Therefore, the chuck claws 109 are protruded from the chuck claw fitting holes 102b such that, as shown in FIG.13, the optical disk 101 is held between the chuck claws 109 and the optical disk loading face of the turntable 102. In this case, receiving projections 114 that are engaged with the chuck claws 109 by a falling action of the elevating member 104 to pull the chuck claws 109 in the chuck claw fitting holes 102b are provided adjacent to the pushing portions 113 respectively.
Patent Literature 1: JP-A-2002-352496 (Page 7, Fig.3)

### Disclosure of the Invention

### Problems that the Invention is to Solve

However, the optical disk device 100 in the prior art, an optical disk holding force, i.e., a pushing force of the spring 107 is applied to the chuck claws 109 via the pushing portions 113 that are formed uniformly in the elevating member 104. Therefore, when only some of plural chuck claws 109 being turned by an upward movement of the elevating member 104 contact the optical disk 101 due to any trouble, e.g., when a surface of the optical disk 101 is loaded obliquely to the turntable, or the like, the upward movement of the elevating member 104 is stopped at this point of time. As a result, there existed such problems that remaining chuck claws 109 cannot perfectly hold the optical disk 101 and thus a sufficient optical disk holding force cannot be ensured.

The present invention has been made to solve the problems in the prior art, and it is an object of the present invention to provide an optical disk device capable of obtaining a required optical disk holding force uniformly and sufficiently rather than the prior art.

### Means for Solving the Problems

An optical disk device of the present invention, includes a turntable having a loading portion on which an optical disk is loaded; chuck claws turned to contact the optical disk; pushing members for pushing one end portions of the chuck claws; and an elevating member for elevating the pushing members, whereby the pushing members push one end portions of the chuck claws in response to a rise of the elevating member to turn the chuck claws such that other end portions of the chuck claws and the loading portion hold the optical disk to fix the optical disk on the turntable; wherein the pushing members have an elasticity.

According to this configuration, when the information held and recorded on the optical disk is reproduced, the recording face of the optical disk is loaded on the loading portion of the clamping mechanism, then the projection portion is passed through a hollow portion of the optical disk to the label face side, and then the optical disk is held by the chuck claws protruded from the projection portion. At this time, the chuck claws are turned around the supporting shaft provided along a tangential direction of the projection portion respectively to clamp the optical disk, but the base end portions of the chuck claws are pushed by the pushing portions provided to the pushing members to have an elasticity and are turned. Therefore, even when a particular chuck claw gets caught, the pushing portion that is pushing the caught chuck claw is elastically deformed to allow the pushing members to move, so that remaining pushing portions push the base end portions of remaining chuck claws. As a result, remaining chuck claws can clamp the optical disk without fail.

Also, in the optical disk device of the present invention, the pushing members and the elevating member are formed integrally.

According to this configuration, the pushing members are formed integrally with the elevating member. Therefore, an increase of the number of articles can be prevented.

Also, in the optical disk device of the present invention, the pushing members are formed of a plate member whose one end side is coupled to the elevating member and which is curved like a circular arc.

According to this configuration, the pushing portions can have a sufficient elasticity with a simple structure while maintaining a strength of the elevating member.

Also, the optical disk device of the present invention further includes chuck claw fitting windows for storing the chuck claws; and receiving projections for confining action of the chuck claws in a storage position.

According to this configuration, a turning angle of the chuck claws can be reduced upon holding the optical disk, an operating distance of the pushing portions can be shortened, the optical disk can be held without fail, and the turntable can be thinned.

Also, in the optical disk device of the present invention, the pushing member is provided on both sides of the receiving projection.

According to this configuration, the pushing area of the chuck claw can be widened, and also the chuck claws can be pushed more surely stably.

Also, in the optical disk device of the present invention, the groove portions into which one end portions of the receiving projections are inserted are provided on rear surface sides of the chuck claws.

According to this configuration, a diameter of the elevating member can be thickened, and also the elevating member can increase the stability in the direction parallel with the optical disk loading face. Therefore, the pushing portions can push the chuck claws securely.

### Advantages of the Invention

According to the present invention, the pushing portions for pushing the chuck claws are formed to have elasticity, and thus the pushing portions can push all chuck claws uniformly with a sufficient pushing force. Therefore, the present invention can provide the optical disk device that possesses such an advantage that a sufficient optical disk holding force can be ensured.

### Brief Description of the Drawings

[FIG.1] A general perspective view showing a car audio equipment in which an optical disk device according to an embodiment of the present invention is built.
[FIG.2] A plan view showing a standby state of the optical disk device according to the present invention when viewed from a II-II position in FIG.1.
[FIG.3] A plan view showing a playing state of the optical disk device according to the present invention when viewed from a III-III position in FIG.1.
[FIG.4] (A) is a plan view of a playing portion, and (B) is a front view of the playing portion.
[FIG.5] (A) is a plan view of a clamping mechanism, and (B) is a sectional view of the clamping mechanism at a B-B position in (A).
[FIG.6] A fragmental enlarged sectional view of the clamping mechanism.
[FIG.7] (A) is a plan view of the clamping mechanism, and (B) is a sectional view of the clamping mechanism at a B-B position in (A).
[FIG.8] A fragmental enlarged sectional view of the clamping mechanism.
[FIG.9] (A) is a plan view of a chuck claw, (B) is a side view of the chuck claw viewed from a B direction in (A), and (C) is a sectional view of the chuck claw in a C-C position in (A).
[FIG.10] A sectional view of an elevating member.
[FIG.11] An enlarged perspective view showing pushing portions.
[FIG.12] A sectional view showing a non-held state of an optical disk by a clamping mechanism of an optical disk device in the prior art.
[FIG.13] A sectional view showing a held state of the optical disk by the clamping mechanism of the optical disk device in the prior art.
[FIG.14] A fragmental enlarged sectional view of the clamping mechanism of the optical disk device in the prior art.

### [Description of Reference Numerals and Signs]

- 10: optical disk device
- 12: optical disk
- 31: turntable
- 32: loading portion
- 35: chuck claw
- 35a: base end portion (one end portion)
- 35b: stepped groove portion (groove portion)
- 35c: top end portion (the other end portion)
- 36: pushing member
- 37: chuck claw fitting window
- 40: elevating member
- 44: receiving projection

### Best Mode for Carrying Out the Invention

An optical disk device of an embodiment of the present invention will be explained with reference to the drawings hereinafter.

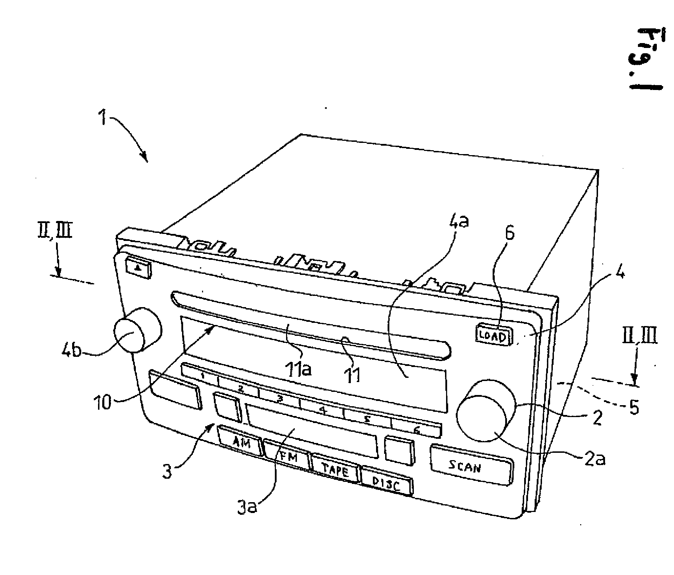

A general perspective view of a car audio equipment 1 in which an optical disk device 10 according to an embodiment of the present invention is built is shown in FIG.1. In addition to the optical disk device 10, a radio 2, a cassette tape player 3, etc. are built in the car audio equipment 1. An optical disk slot 11 for the optical disk device 10, a radio tuning knob 2a, a cassette tape slot 3a, etc. as well as a display portion 4a, a power/volume knob 4b, etc. that are used commonly to all functions are provided on a front panel 4. Also, a controlling portion 5 for controlling the radio 2, a cassette tape player 3, the optical disk device 10, etc. is provided in the inside.

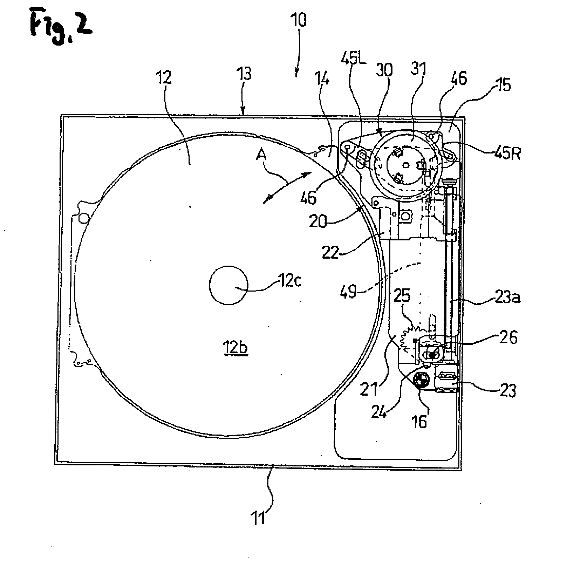

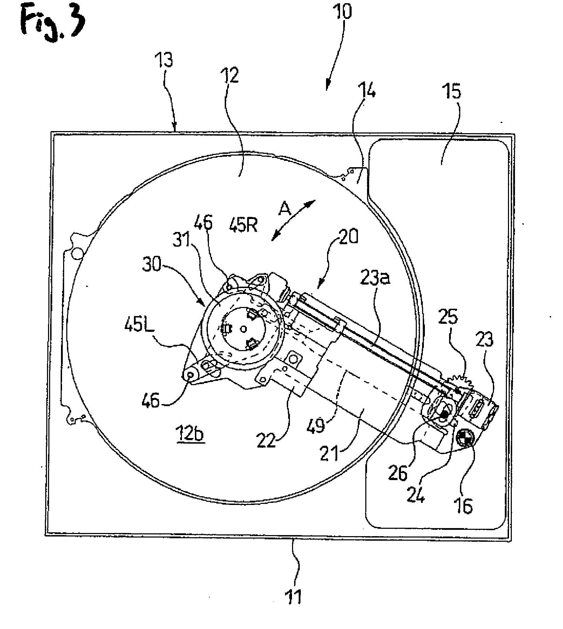

Plan views of the optical disk device 10 according to the embodiment of the present invention built in the car audio equipment 1 when viewed from a II-II position and a III-III position in FIG.1 are shown in FIG.2 and FIG.3 respectively.

As shown in FIG.2 and FIG.3, the optical disk device 10 includes a main body 13 shaped like a rectangular box, plural sheets of trays 14 contain an optical disk 12 in a stacked fashion in the main body 13, a tray opening/closing unit (not shown) provided to a base 15, which is fixed at a predetermined height in the main body 13, to open/close a predetermined tray 14, and a playing portion 20 supported to turn around a shaft 16 provided to the base 15 in the direction indicated with an arrow A.

The playing portion 20 has a flat plate-like suspension chassis 21 that is turned around the shaft 16, and the suspension chassis 21 has a clamping mechanism 30 that turns while holding the optical disk 12. Also, in order to access the optical disk 12 that is held by the clamping mechanism 30 and is rotated, the suspension chassis 21 has a pickup 22 supported to move reciprocally along the suspension chassis 21, and a drive motor 23 and a lead screw 23a for moving this pickup 22. In this case, a luffa-like cam groove 24 is formed in vicinity of the shaft 16 of the suspension chassis 21, and a rotating/driving shaft 26 provided upright to a rotating/driving plate 25 is engaged with the cam groove 24.

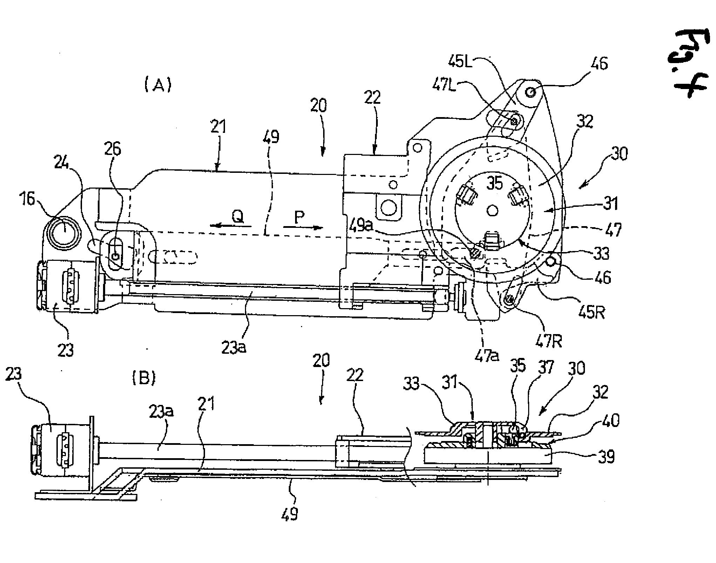

Next, the clamping mechanism 30 will be explained with reference to FIG.4 to FIG.11 hereunder.

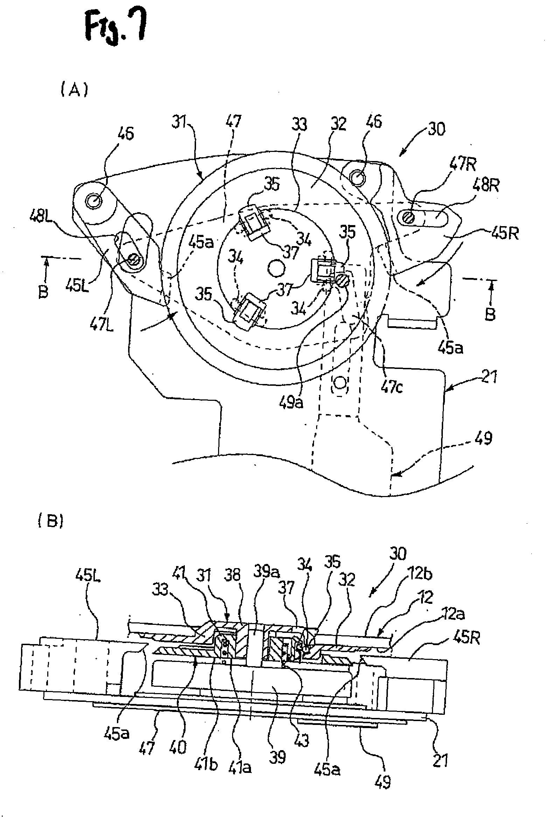

The clamping mechanism 30 has a turntable 31 provided to a top end of the suspension chassis 21 to rotate while holding the optical disk 12, a loading portion 32 on which a recording face 12a (see FIG.7) of the optical disk 12 can be loaded, a substantially cylindrical projection 33 that can project from the loading portion 32 to the label face 12b side (see FIG.7) of the optical disk 12 to pass through a hollow portion 12c (see FIG.2) of the optical disk 12, a plurality of chuck claws 35 that can project retractably from chuck claw fitting windows 37, which are provided in plural locations (e.g., three locations herein) of the circumferential surface of the cylindrical projection 33, to engage with the label face 12b when these chuck claws are turned around a supporting shaft 34 provided along a tangential direction of the cylindrical projection 33 as a fulcrum respectively, and pushing members 36 each having a pushing portion 36a to push a base end portion 35a as one end portion of each chuck claw 35 when this pushing member is moved along an axis line of the cylindrical projection 33. Then, the pushing members 36 has elasticity.

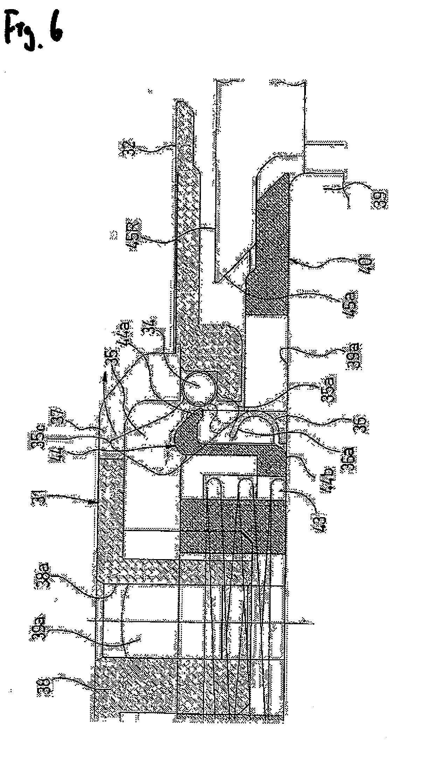

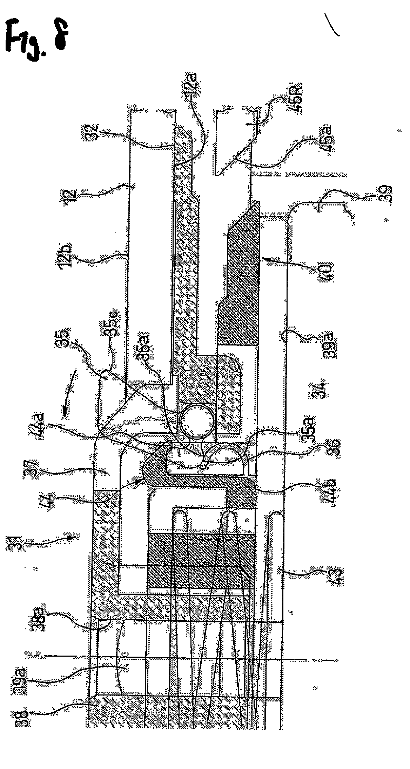

As shown in FIG.6 and FIG.8, a cylinder portion 38 is provided at the center of the turntable 31 in the rotation center direction, and a center shaft through hole 38a is provided to the inside of this cylinder portion 38 to pass through the cylinder portion. A rotating shaft 39a of a rotating motor 39 as a rotating/driving unit is fitted into the center shaft through hole 38a such that the turntable 31 is rotated/driven by the rotating motor 39. An elevating member 40 provided slidably in the direction perpendicular to the loading portion 32 (the vertical direction in Figures) is fitted onto the cylinder portion 38 of the turntable 31, and a spring 43 for pushing the elevating member 40 upward is provided between the elevating member 40 and an upper surface 39b of the rotating motor 39. Also, the chuck claw fitting windows 37 are provided at an equal interval (e.g., 120 degree as a central angle) in the circumferential direction on the side surface of the cylindrical projection 33 of the turntable 31, and the chuck claws 35 are provided retractably in the chuck claw fitting windows 37.

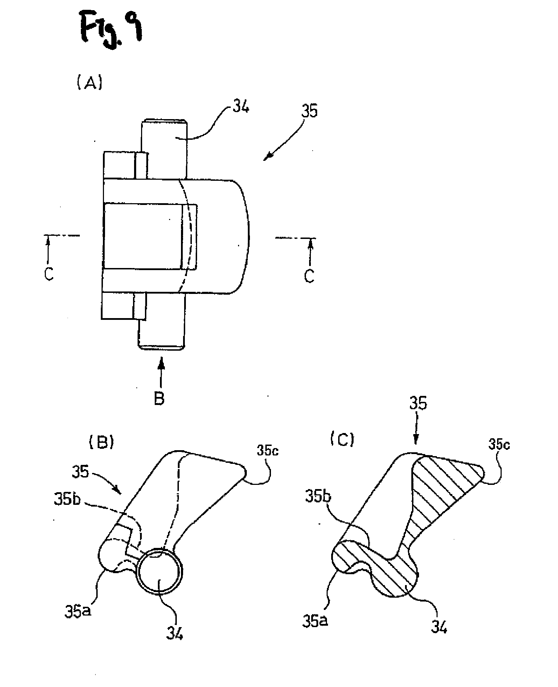

As shown in FIG.9, the supporting shaft 34 is provided to the lower portion of each chuck claw 35, and the base end portion 35a is provided in vicinity of the supporting shaft 34 to project downward. A stepped groove portion 35b as a groove portion is formed in the inside of a main body of the chuck claw 35.

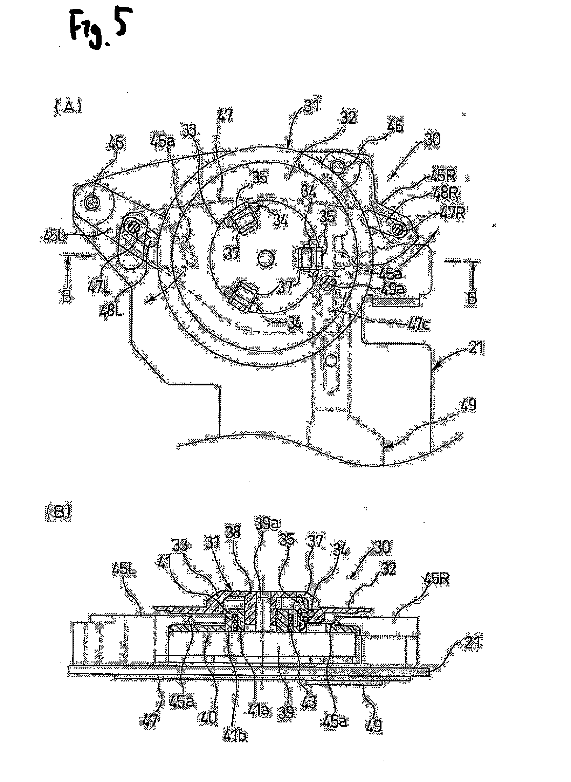

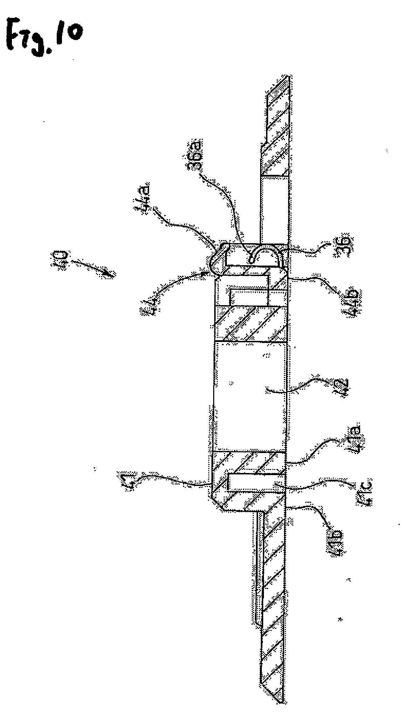

Also, as shown in FIG.5(B) and FIG.10, a cylinder portion 41 having a double wall structure consisting of an inner wall 41 a and an outer wall 41b is formed integrally with the elevating member 40 at its center portion, and a through hole portion 42 fitted onto the cylinder portion 38 of the turntable 31 is formed on the inside of the inner wall 41a. Also, a holding groove 41c for holding the spring 43 is formed between the inner wall 41 a and the outer wall 41 b. Also, receiving projections 44 each having an engaging portion 44a at its top end and a bent portion 44b at its lower end are provided on the outermost periphery of the cylinder portion 41 to correspond to provision locations of the chuck claws 35. The engaging portions 44a of the receiving projections 44 are engaged with the stepped groove portions 35b of the chuck claws 35 when the elevating member 40 goes downward, and cause the chuck claws 35 to turn around the supporting shaft 34 and pull them into the chuck claw fitting windows 37.

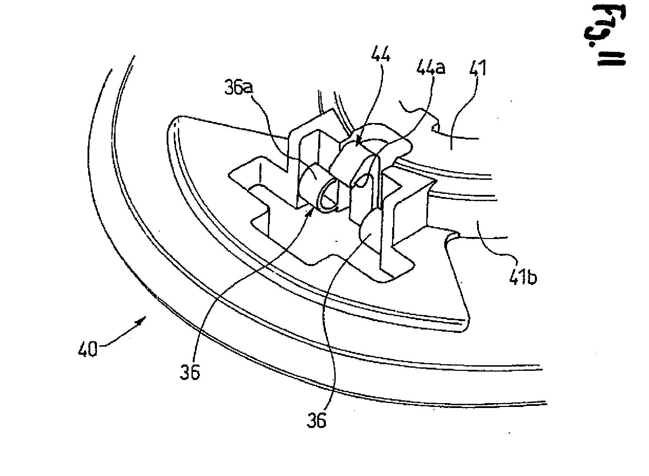

As shown in FIG.11, the pushing member 36 is provided in vicinity of right and left sides of the receiving projection 44. The pushing members 36 push the base end portions 35a of the chuck claws 35 in response to a rise of the elevating member 40 to turn the chuck claws 35 on the supporting shaft 34 respectively and cause the chuck claws 35 to project from the chuck claw fitting windows 37. The pushing portions 36a formed elastically as the bent portion are provided integrally with the pushing members 36. The pushing portions 36a push elastically the base end portions 35a of the chuck claws 35, and hold the optical disk 12 between top end portions 35c of the chuck claws 35 as the other end portions and the loading portion 32.

As shown in FIG.5(A) and FIG.7(A), elevating levers 45L, 45R used to fall the elevating member 40 against a pushing force of the spring 43 are provided insertably between the turntable 31 and the elevating member 40. The elevating levers 45L, 45R are provided to the top end portion of the suspension chassis 21 as a paired form in opposing positions to put the turntable 31 therebetween, and are provided to the suspension chassis 21 to turn around a turning center 46 respectively. A taper 45a is formed to the top ends of the elevating levers 45L, 45R respectively, and causes the elevating member 40 to fall when the tapers 45a are inserted between the turntable 31 and the elevating member 40.

A connecting plate 47 for connecting the left and right elevating levers 45L, 45R is provided to a lower surface of the top end portion of the suspension chassis 21 to turn around the same shaft as the center of the turntable 31. Action shafts 47L, 47R are provided to the left and right end portions to direct upward. The action shafts 47L, 47R are inserted movably into cam grooves 48R, 48L provided to the left and right elevating levers 45L, 45R respectively. In contrast, a driving lever 49 is provided to a lower surface of the suspension chassis 21 to move along the longitudinal direction. A driving shaft 49a is provided to the top end to direct upward and is fitted movably into a cam groove 47a provided in the connecting plate 47.

Next, a holding operation of the optical disk 12 in the optical disk device 10 according to the present embodiment will be explained hereunder.

As shown in FIG.5 and FIG.6, a plurality of chuck claws 35 are put in the inside of the chuck claw fitting windows 37 of the turntable 31 before the optical disk 12 is loaded on the turntable 31. When the optical disk 12 is loaded on the loading portion 32 of the turntable 31 in this state, the driving lever 49 is started to move to the center direction (P direction in FIG.4) of the optical disk 12 by a driving unit (not shown). Accordingly, the driving shaft 49a of the driving lever 49 is brought into the end face of the cam groove 47a of the connecting plate 47 to turn the connecting plate 47 in a counterclockwise direction. Then, the action shafts 47L, 47R of the connecting plate 47 push end faces of the cam grooves 48R, 48L of the elevating levers 45L, 45R such that both elevating levers 45L, 45R are moved in the direction (arrow direction in FIG.5(A)) to become distant from the center of the turntable 31. As a result, both elevating levers 45L, 45R are released from a space between the turntable 31 and the elevating member 40 and then the elevating member 40 is lifted by a spring force of the spring 43.

At this time, as shown in FIG.6, the pushing portions 36a of the pushing members 36 contact the base end portions 35a of plural chuck claws 35 in response to the rise of the elevating member 40 to push up the chuck claws. Therefore, a plurality of chuck claws 35 are turned on the supporting shafts 34 in the arrow direction in FIG.6 respectively to protrude from the chuck claw fitting windows 37 and clamp the optical disk 12 (see FIG.8). Here, even when merely any one of plural chuck claws 35 contacts the optical disk 12 because of the inclination of the optical disk 12 loaded on the turntable 31, dimensional variation of the constituent parts such as the chuck claws 35, and the like, the upward sliding operation of the elevating member 40 is not stopped and continued owing to an elastic action of the pushing portions 36a that are provided integrally with the pushing members 36 of the elevating member 40. Therefore, remaining chuck claws 35 are protruded from the chuck claw fitting windows 37 to hold the optical disk 12, so that the optical disk 12 can be held securely.

On the contrary, when the optical disk 12 is released from the optical disk holding state shown in FIG.7 and FIG.8, first the driving lever 49 is moved in the direction to go away from the turntable 31 (the Q direction in FIG.4). Accordingly, the connecting plate 47 is rotated in a clockwise direction in FIG.7(A) by actions of the driving shaft 49a provided to the top end of the driving lever 491 and the cam grove 47a of the connecting plate 47. Thus, this connecting plate 47 causes the elevating levers 45L, 45R to turn toward the center direction of the turntable 31 (the arrow direction in FIG.7(A)) via the action shafts 47L, 47R respectively. According to this rotating action, the elevating levers 45L, 45R are put between the elevating member 40 and the turntable 31 to move the elevating member 40 to the rotating motor 39 side (downward in FIG.8) against a spring force of the spring 43. At this time, the pushing portions 36a in the elevating member 40 is separated from the base end portions 35a of the chuck claws 35 and also the engaging portions 44a of the receiving projections 44 in the elevating member 40 are engaged with the stepped groove portions 35b provided to the back surfaces of the chuck claws 35, so that the chuck claws 35 are turned on the supporting shaft 34 as a rotating fulcrum. As a result, the holding of the optical disk 12 is released, the chuck claws 35 are put back in the chuck claw fitting windows 37, and the optical disk 12 goes back to a state in FIG.5. Also, in the state in FIG.5, because the rear surface sides of the chuck claws 35 and one end portions of the receiving projections 44 are kept in their contact condition, the receiving projections 44 restrict the action of the chuck claws 35 such that the chuck claws 35 are not further fallen down to the center side of the turntable 31.

Not only the chuck claws 35 may be housed while engaging the engaging portions 44a of the receiving projections 44 with the base end portions 35a provided to the rear faces of the chuck claws 35, but also respective shapes of the chuck claws 35 and the pushing portions 36a may be decided such that the chuck claws 35 can be guided to the received positions of the chuck claw fitting windows 37 during the falling action of the elevating member 40 because of their own weight of the chuck claws 35 while contacting the pushing portions 36a to the base end portions 35a. And, the chuck claws 35 may be housed in answer to the elevating action of the elevating member 40.

According to the optical disk device 10 of the embodiment of the present invention, the pushing portions 36a provided integrally with the pushing members 36 of the elevating member 40 is formed elastically by providing the bent portion. Therefore, all plural chuck claws 35 can engage uniformly with the optical disk 12 by a sufficient pushing force, a necessary optical disk holding force can be ensured, and the optical disk 12 ca be held on the turntable without fail.

In this case, although not illustrated in the present embodiment, a dedicated driving source may be provided as the driving source of the driving lever 49. For example, in the optical disk device 10 shown in FIG.2 and FIG.3, a series of action driving sources for turning the suspension chassis 21 may be utilized.

A reproducing operation of the optical disk 12 will be explained with reference to FIG.2 and FIG.3 hereunder.

First, a predetermined tray 14 is opened by the tray opening/closing unit. Then, the rotating/driving plate 25 is turned by a driving source (not shown), and the suspension chassis 21 is turned around the shaft 16 in the arrow A direction from a standby position shown in FIG.2 to a playing position shown in FIG.3 by means of a cooperation between the cam grooves 24 and the rotating/driving shaft 26. Thus, the suspension chassis 21 is inserted between the predetermined trays 14. In addition, the reproducing state shown in FIG.3 is brought about by moving the driving lever 49 toward the center of the optical disk, and the optical disk 12 is held by the above clamping mechanism 30. The information recorded on the optical disk 12 is reproduced while rotating the optical disk 12 and moving the pickup 22 along the suspension chassis 21.

Here, the present invention is not limited to the optical disk device 10 that contains plural sheets of optical disks 12 in a stacked fashion and then plays selectively the optical disk 12. The present invention can be applied similarly to the optical disk device in which the optical disk 12 is inserted one by one to play.

This application is based upon Japanese Patent Application (Patent Application No.2004-165489) filed on June 03, 2004; the entire contents of which are incorporated herein by reference.

### Industrial Applicability

As described above, according to the optical disk device according to the present invention, the pushing portions in the elevating member that pushes the chuck claws to turn is formed to have elasticity, and thus all chuck claws can hold uniformly the optical disk with a sufficient pushing force. Therefore, the present invention possesses such an advantage that a sufficient optical disk holding force can be ensured, and is useful to the optical disk device for CD, DVD, etc., particularly the optical disk device that holds the center hole of the optical disk on the turntable, and the like.

## Claims

1. An optical disk device, comprising:
a turntable that has a loading portion on which an optical disk is loaded;
chuck claws that are turned to contact the optical disk;
pushing members that pushes one end portions of the chuck claws; and
an elevating member that elevates the pushing members so that the pushing members push one end portions of the chuck claws in response to a rise of the elevating member to turn the chuck claws such that other end portions of the chuck claws and the loading portion hold the optical disk to fix the optical disk on the turntable,
wherein the pushing members have an elasticity.

2. The optical disk device according to claim 1, wherein the pushing members and the elevating member are formed integrally.

3. The optical disk device according to claim 2, wherein the pushing members are formed of a plate member which is curved like a circular arc; and
wherein one end side of the plate member is coupled to the elevating member.

4. The optical disk device according to any one of claims 1 to 3, further comprising:
chuck claw fitting windows that store the chuck claws; and
receiving projections that restrict actions of the chuck claws in storage positions.

5. The optical disk device according to claim 4, wherein the pushing members are provided on both sides of the receiving projections.

6. The optical disk device according to claim 4 or claim 5, wherein groove portions, into which one end portions of the receiving projections are inserted, are provided on rear surface sides of the chuck claws.
